# EUROPÄISCHE PATENTANMELDUNG

(11) **EP 0 601 387 A1**
(43) Veröffentlichungstag der Anmeldung: **15.06.1994**
(21) Anmeldenummer: 93118873.4
(22) Anmeldetag: 24.11.1993
(51) Int. Cl.: A21B 3/13, A47J 43/20

(54) **Backform**

(71) Anmelder: LEIFHEIT Aktiengesellschaft, D-56377 Nassau (DE)
(72) Erfinder: Liebscher, Johannes, D-56377 Nassau/Lahn (DE)

(57) **Zusammenfassung**

Die Backform weist einen topfförmigen Boden 1 mit einer senkrechten Umfangswand 2 und einen zylindrischen Mantel 3 aus einem Band 4 auf, das zusammenspannbar ist und dessen Enden 5,6 sich überlappen. Zum Zusammensetzen der Backform wird das Band 4 leicht zusammengespannt, in den topfförmigen Boden 1 eingesetzt und dann losgelassen, wodurch es sich aufspannen kann und aufgrund seiner Eigenspannung kraftschlüssig an der Umfangswand 2 des Bodens 1 anliegt. Dadurch kann der bisher übliche Spannverschluß entfallen.

## Beschreibung

Die Erfindung betrifft eine Backform entsprechend dem Oberbegriff des Anspruchs 1,

Bei konventionellen Backformen dieser Art (siehe z.B. DE-GM 87 04 727) umgibt der Mantel den Boden und die Enden des den Mantel bildenden Bandes sind mit einem Spannverschluß versehen, mit dem das Band zusammengespannt wird, nachdem der Boden in den Mantel eingelegt ist. Der Spannverschluß besteht in der Regel aus einem Spannhebel und einem Bügel, die an den Enden des Bandes durch angenietete Lagerböcke schwenkbar befestigt sind. Die Herstellung einer derartigen Backform ist wegen des Spannverschlusses verhältnismäßig aufwendig.

Aufgabe der Erfindung ist es, eine Backform der gattungsgemäßen Art zu schaffen, die sich durch einen einfacheren Aufbau auszeichnet und mit gerigerem Aufwand hergestellt werden kann.

Diese Aufgabe wird erfindungsgemäß dadurch gelöst, daß der Boden mit einer senkrechten Umfangswand versehen ist, die den Mantel umgreift.

Bei dem erfindungsgemäßen Vorschlag wird das den Mantel bildende Band geringfügig zusammengespannt, in den topfartigen Boden eingesetzt und dann losgelassen, worauf sich das Band durch seine Eigenspannung an die Umfangswand des Bodens anlegt und den Boden festhält. Durch den Wegfall des Spannverschlusses wird die Herstellung der Backform erheblich verbilligt, ohne daß der Gebrauchswert vermindert wird.

Vorzugsweise ist der untere Rand des den Mantel bildenden Bandes nach innen umgebogen. Er kann dann als Auflager für eine aus beschichtetem Blech, Glas oder Kunststoff bestehende Scheibe dienen, was insbesndere bei der Herstellung von feuchten Kuchen und/oder von Kuchen mit dünnem Boden, wie z.B. Obstkuchen, von Vorteil ist. Die Kante des umgebogenen Randes kann nach außen zurückgebogen sein, wodurch ein Luftposter zwischen dem Boden und der Scheibe entsteht, das ein Anbrennen des Kuchenbodens verhindert. Natürlich kann auch in üblicher Weise eine Scheibe aus Backpapier auf den Boden aufgelegt werden.

Ein Ausführungsbeispiel der Erfindung wird im folgenden unetr Bezugnahme auf die Zeichnungen beschrieben. Es zeigt:
- Fig. 1: eine Backform im Schnitt,
- Fig. 2: einen Teilschnitt entlang Linie 2-2 in Fig. 1, und
- Fig. 3: einen Teilschnitt mit einer Abwandlung.

Die Backform weist einen kreisrunden Boden 1 mit einer senkrechten Umfangswand 2 und einen zylindrischen Mantel 3 auf. Der Mantel ist von einem kreisförmig gebogenen Band 4 gebildet, dessen Enden 5 und 6 sich überlappen.

Der obere Rand des Bandes 4 ist mit einer Wulst 7 versehen, die in üblicher Weise am einen Ende im Bereich der überlappung ausgespart ist, um das andere Ende aufnehmen zu können und die Bandenden 5 und 6 zu führen. Der untere Rand 8 des Bandes 4 ist nach innen 8 umgebogen.

Der Boden 1 hat aufgrund seiner senkrechten Umfangswand 2 die Form eines Topfes. Die Oberkante 9 der Umfangswand 2 ist nach außen umgebogen und kann als Handhabe dienen.

Zum Zusammensetzen der Backform wird das den Mantel 3 bildende Band 4 leicht zusammengespannt und in den topfförmigen Boden 1 eingesetzt. Nach dem Loslassen spannt sich das Band 4 auf und es wird durch seine Eigenspannung an die Umfangswand 2 des Bodens 1 angedrückt, wodurch eine ausreichend feste kraftschlüssige Verbindung zwischen dem Boden 1 und dem Mantel 3 hergestellt ist.

Auf den Boden 1 kann ein Backpapier aufgelegt werden. Soll ein feuchter Kuchen oder ein Kuchen mit dünnem Boden gebacken werden, so empfiehlt es sich, auf den Rand 8 eine Scheibe 10 aus beschichtetem oder emailliertem Blech, Glas oder entsprechend hitzebeständigem Kunststoff aufzulegen, um ein Festbacken am Boden 1 zu vermeiden und das Herausheben des Kuchens zusammen mit dem Mantel 2 aus dem Boden 1 zu erleichtern.

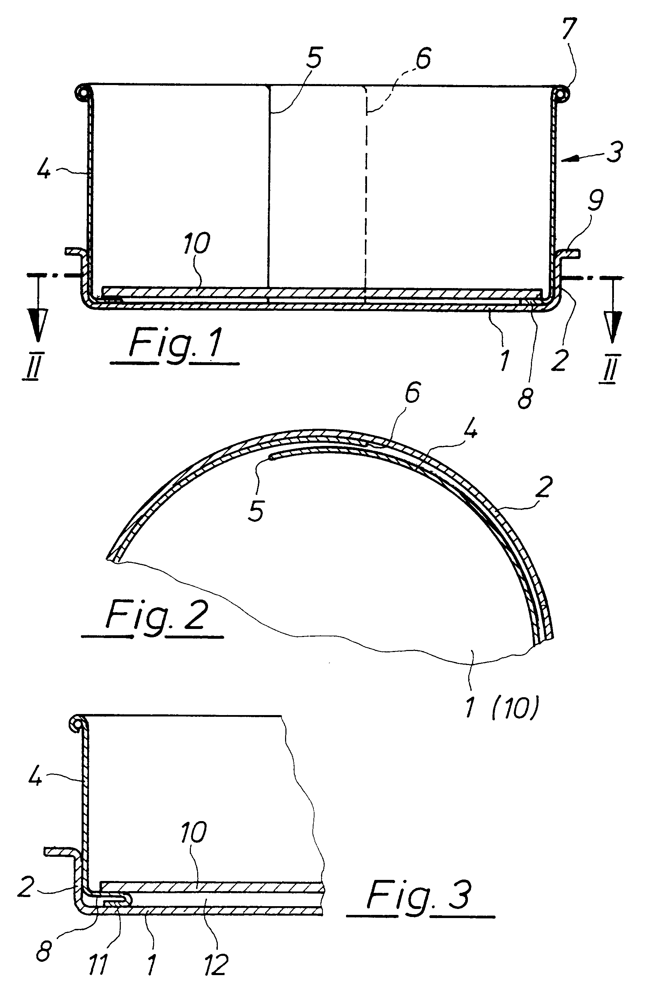

In Fig. 3 ist eine Abwandlung der in Fig. 1 und 2 gezeigten Backform dargestellt, und zwar ist hier die Kante 11 des nach innen umgebogenen unteren Randes 8 des Bandes 4 nach außen zurückgebogen. Dadurch entsteht zwischen dem Boden 1 und der Scheibe 10 ein Luftpolster 12, das verhindert, daß der Boden des Kuchens beim Backen anbrennt.

## Patentansprüche

1. Backform mit einem zylindrischen Mantel (3) aus einem Band (4), das zusammenspannbar ist und dessen Enden (5,6) sich überlappen, und mit einem lösbar mit dem Mantel verbundenen, kreisförmigen Boden (1), dadurch gekennzeichnet, daß der Boden (1) eine senkrechte Umfangswand (2) aufweist, die den Mantel (3) umgreift.

2. Backform nach Anspruch 1, dadurch gekennzeichnet, daß der untere Rand (8) des Mantels (2) nach innen zu umgebogen ist.

3. Backform nach Anspruch 2, gekennzeichnet durch eine auf den umgebogenen Rand (8) des Mantels (3) aufgelegte Scheibe (10).

4. Backform nach Anspruch 3, dadurch gekennzeichnet, daß die Scheibe (10) aus gegebenenfalls beschichtetem oder emailliertem Blech besteht.

5. Backform nach Anspruch 3, dadurch gekennzeichnet, daß die Scheibe (10) aus Glas besteht.

6. Backform nach Anspruch 3, dadurch gekennzeichnet, daß die Scheibe (10) aus Kunststoff besteht.

7. Backform nach Anspruch 2 und einem der Ansprüche 3 bis 6, dadurch gekennzeichnet, daß die Kante (11) des umgebogenen unteren Randes (8) des Mantels (3) nach außen zurückgebogen ist, um ein Luftpolster (12) zwischen dem Boden (1) und der Scheibe (10) zu schaffen.
